Europäisches Patentamt

European Patent Office

Office européen des brevets

(11) Publication number: **0 438 958 A2**

# EUROPEAN PATENT APPLICATION

(21) Application number: 90480213.9

(22) Date of filing: 12.12.90

(51) Int. Cl.⁵: **G06F 15/403**

(30) Priority: 22.01.90 US 468023

(43) Date of publication of application:
31.07.91 Bulletin 91/31

(84) Designated Contracting States:
DE FR GB

(71) Applicant: International Business Machines
Corporation
Old Orchard Road
Armonk, N.Y. 10504(US)

(72) Inventor: Hicks, Daniel Rodman
513 4th Avenue N.E.
Byron, Minnesota 55920(US)

(74) Representative: Vekemans, André
Compagnie IBM France Département de
Propriété Intellectuelle
F-06610 La Gaude(FR)

(54) **Byte stream file management using shared and exclusive locks.**

(57) A method is provided for managing at least one
predefined portion of storage, utilizing a plurality of
locks, each of which encompasses a contiguous
range of storage, comprising the steps of: (a) defining a plurality of lock related parameters for each of
said locks; (b) organizing said plurality of parameters
for each lock in a logically two dimensionally order;
and (c) managing lock attempts by comparing the
plurality of lock related parameters associated with
an attempted lock, with at least a portion of said
plurality of parameters organized in said two dimen-
sional order. According to a preferred embodiment
of the invention, the two dimensional ordering of said
plurality of lock related parameters is a Cartesian
tree. The Cartesian tree is used to provide a means
for quickly and efficiently determining whether or not
to grant an attempted lock. Each node of the tree
consists of an ordered pair of keys where the first
key is the offset, within the file, of the start of the
lock range. The second key is the length or span of
the lock. The invention dynamically creates the Car-
tesian tree utilizing three parameters associated with
(defined for) each lock, namely: (1) the starting location of the data to be protected (the first key); (2) the
span (or range) of the data to be protected (the
second key); and (3) the type of lock desired (shared
or exclusive).

EP 0 438 958 A2

# BYTE STREAM FILE MANAGEMENT USING SHARED AND EXCLUSIVE LOCKS

The invention relates generally to data base management systems. More particularly, the invention relates to methods for performing byte stream file management in computer systems that utilize both shared (read only) and exclusive (read/write) locks to manage access to predefined portions of storage.

Many techniques are known for managing access to predefined portions of storage in computer systems having data organized into discrete entities called "records", (i.e., groups of bytes containing related data items), where no overlap is permitted between adjacent records.

It is well known to utilize a variety of locking schemes to protect such records and manage access to a data base. For example, data can be protected from being changed during a read operation with a "read" lock that excludes writes, but allows shared access to data protected by the lock. Such a lock would assure that no modification to protected data is possible while the read lock is in effect.

Access to record type data can also be controlled via the use of "read/write" locks. These locks typically exclude all read and write access to the portion of storage managed by the lock, other then read or write accesses initiated by the lock holder.

Record oriented locking techniques, particularly when used to manage a large data base, can expend significant amounts of time locking and unlocking data records. Degradation of system performance is likely to occur as a result of utilizing such techniques.

Many articles and inventions have been directed to improving data base management techniques for computer systems which organize data in records. For example, in the IBM Technical Disclosure Bulletins Volume 25, No. 7B, published in December of 1982, and Volume 25, No. 11A, published in April of 1983, techniques for locking portions of tree form indices are described, where the record oriented trees provide keyed access to a data base.

U.S. Patent Nos. 4,480,304 and 4,399,504, in the context of a data base system distributed across multiple processors, describe mechanisms that use hash tables to maintain the lock status of discrete resources, such as data base records.

In U.S. Patent No. 4,698,752, a data base management system is described in which records are locked out during record changing by using a dynamically generated directed graph that expresses a relationship between the records. Once again, however, the locking is performed on discrete entities.

Data base management schemes that are not lock oriented are also known in the prior art. For example, U.S. Patent No. 4,627,019, accomplishes data base access control by "versioning", i.e., by maintaining multiple copies of data rather than by locking. Such techniques can be problematic because of storage requirements, copy maintenance overhead, etc.

None of the known data base management systems, including those systems that employ various forms of discrete entity (e.g., record) locking, those that use the aforementioned versioning technique, or those which use any of the aforementioned types of trees or directed graphs to speed up processing, deal effectively with "PC" style data, e.g., data that is maintained by computers running PC DOS software, or its equivalent.

The data in these systems (referred to hereinafter as "byte stream files") is typically not organized into records (i.e., is not aligned on predetermined boundaries) and a request for access from one application may overlap in some arbitrary fashion with data being accessed by another application. Independent boundaries due to program execution may differ from one program to another or even from one execution to the next of the same program.

Managing byte stream files in computer systems which allow both shared (read only) and exclusive (read/write) locks (to allow for increased concurrent data access) poses special problems.

For example, it is possible for one program in such a computer system to request a lock on bytes 10 through 20 of a file, while a different program holds a lock on bytes 15 through 25 (overlapping is permitted in the exemplary non-record oriented system).

If only exclusive locks were allowed, no major problem would exist since exclusive locks would never overlap. Only the immediate "neighbors" of an attempted lock would need to be examined by the data base management system to determine if an attempted lock should be allowed.

However, if shared locks are also allowed (where shared locks, by their nature can overlap) the locks that begin or end nearest to an attempted exclusive lock are not necessarily the only locks that can cause a conflict. For example, a "large" shared lock could span the area of the attempted exclusive lock and its "neighbors".

A specific example to illustrate this general problem follows. In a list of existing locks ordered, e.g., by starting address, there may be one shared lock starting at address 107 and ending at address 134, with a second shared lock starting at address 109 and ending at address 114, and a third shared lock starting at address 121 and ending at address 132. If one wanted to obtain an exclusive lock of the range from address 117 to address 120, a search of the ordered list (in both directions from the point of the new lock) would find a shared lock ending at 114 and one starting at 121 -- it would appear that the attempted lock should be allowed. However, the shared lock extending from 107 to 134 should prevent the desired exclusive lock that falls within that range.

To solve the problem posed by the illustrative example, an exhaustive search of at least some subrange of the existing locks would be needed to assure no conflicts, whenever lock information is maintained in some unidimensional order.

It would be desirable to be able to perform byte stream file management (1) without having to somehow create and manipulate discrete data entities, such as data records; (2) without having to create and manipulate multiple copies of data in memory (as required by versioning), and (3) without having to perform exhaustive searches of unidimensionally ordered lock lists to assure no conflicts exist in computer systems allowing the use of both shared (read only) and exclusive (read/write) locks to manage byte stream file data.

It is an object of the invention to provide a method for managing a byte-stream file utilizing shared and exclusive locks, where the method does not require the exhaustive search of an ordered list of locks held whenever a lock attempt is made.

It is a further object of the invention to provide a data base management system that utilizes a plurality of locks to manage access to files that are permitted to overlap, where the data base management technique employed only requires three input parameters: (1) the starting location of the data to be protected; (2) the span (or range) of the data to be protected; and (3) the type of lock desired (shared or exclusive).

It is still a further object of the invention to provide a method for organizing lock related data in such a way that an efficient determination can be made as to whether to allow or deny a given lock attempt, without requiring multiple copies of data to be created and stored, and without requiring extensive data base management overhead to be expended.

Further yet, it is an object of the invention to provide methods for maximizing the performance of the data base management techniques contemplated herein.

According to the invention, a method is provided for managing at least one predefined portion of storage, utilizing a plurality of locks, each of which encompasses a contiguous range of storage, comprising the steps of: (a) defining a plurality of lock related parameters for each of said locks; (b) organizing said plurality of parameters for each lock in a logically two dimensional order; and (c) managing look attempts by comparing the plurality of lock related parameters associated with an attempted lock, with at least a portion of said plurality of parameters organized in said two dimensional order.

Furthermore, according to a preferred embodiment of the invention, the two dimensional ordering of said plurality of lock related parameters is a Cartesian tree. The Cartesian tree is used to provide a means for quickly and efficiently determining whether or not to grant an attempted lock.

According to the preferred embodiment of the invention in which a Cartesian tree is used, each node of the tree consists of an ordered pair of keys where the first key is the offset, within the file, of the start of the lock range. The second key is the length or span of the lock (or if convenient, the length minus one).

Still further, according to a preferred embodiment of the invention, the Cartesian tree is dynamically created utilizing three parameters associated with each lock, namely: (1) the starting location of the data to be protected (the first key); (2) the span (or range) of the data to be protected (the second key); and (3) the type of lock desired (shared or exclusive).

The invention features the ability to perform byte stream file management utilizing shared and exclusive locks, the ability to manage locks having overlapping ranges and the ability to manage locks having duplicate keys. These and other objects and features of the present invention and the manner of obtaining them will become apparent to those skilled in the art, and the invention itself will be best understood by reference to the following detailed description read in conjunction with the accompanying Drawing.

FIG. 1 depicts a set of unidimensional tree structures containing identical information, and particularly illustrates the concept of a balanced tree.

FIG. 2 depicts a Cartesian tree created using a fixed set of ordering rules, where the resulting tree is suitable for use by the invention to manage a plurality of locks.

FIGS. 3A, 3B and 3C depict Cartesian trees containing lock data at each of their nodes. These figures are used, in conjunction with the detailed description set forth hereinafter, to explain how to create a Cartesian tree containing lock data, and how such a tree is used by the invention to determine whether or not to allow lock attempts.

FIG. 4 is a flow chart which illustrates in detail the method steps of the invention. In particular, FIG. 4 illustrates how to create a Cartesian tree from certain lock related parameters (i.e., the step of organizing the parameters) and how to "walk" through the tree to determine whether or not to allow lock attempts (i.e., the step of managing lock attempts).

According to the invention, lock related data (the offset within the file of the start of a lock, and the length -or span- of the lock), is organized in a two-dimensional order rather than in the unidimensional order used by many known data base management schemes.

Such an organization (a two dimension ordering of data) can be achieved using a Cartesian tree. Cartesian trees are similar to conventional binary trees in that each node in the tree contains a key value (e.g., the file offset), with the left and right children selected such that the left child has a key value less than or equal to the parent's, while the right child has a key value which is greater than the parent's.

Cartesian trees are described in detail in an article published by Vuillemin, in the April, 1980, Communications of the ACM.

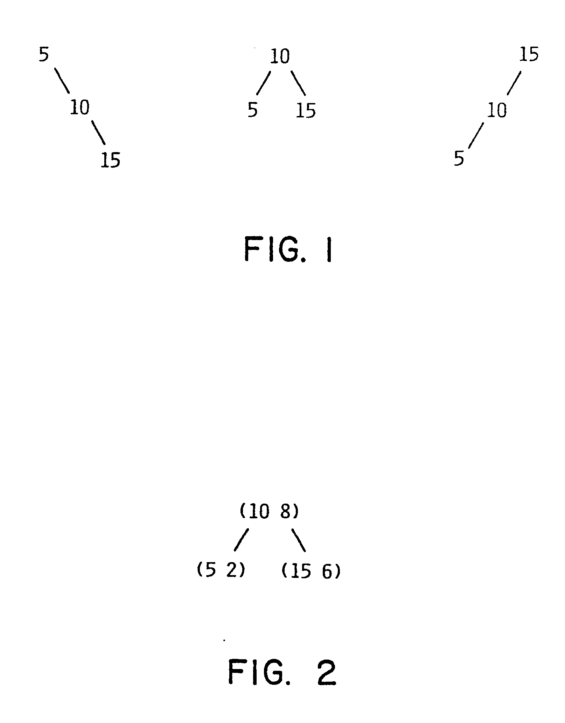

The key ordering rules of a conventional binary tree only partially determine the tree's structure. Given any three discrete keys, any one of the three could be chosen as the root, as shown in FIG. 1. Conventional binary tree algorithms generally try to maintain the second (middle one) of the three structures shown in FIG. 1 in order to minimize tree depth and improve access performance (a concept known as "balance").

A Cartesian tree, as was implied above, utilizes a second key or dimension to further determine tree structure. In particular, the tree is constructed so that the second key of a parent node is always greater than or equal to the second key of its children. Thus, the entries in a Cartesian tree consist of pairs of keys rather than single keys. For instance, given the pairs (5 2), (10 8), (15 6), a Cartesian tree could be constructed as shown in FIG. 2.

It can be observed, with reference to FIG. 2, that unlike the example set forth hereinbefore with reference to FIG. 1, only one structure of the tree is possible if a fixed set of ordering rules is used (e.g., increasing left-to-right for the first key and increasing bottom-to-top for the second) and if the keys are unique.

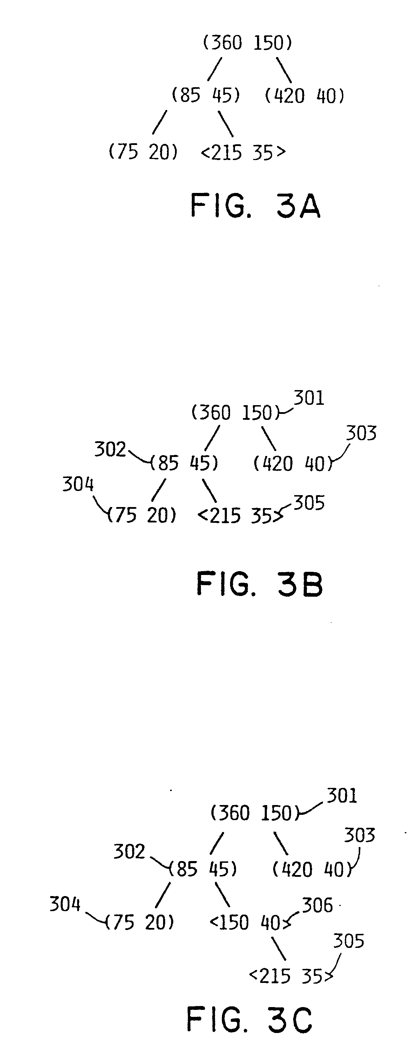

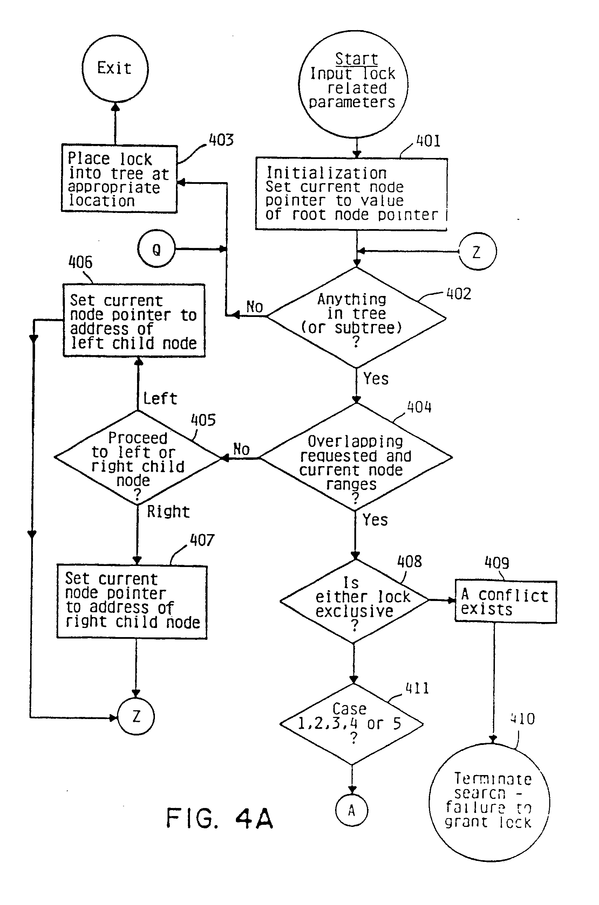

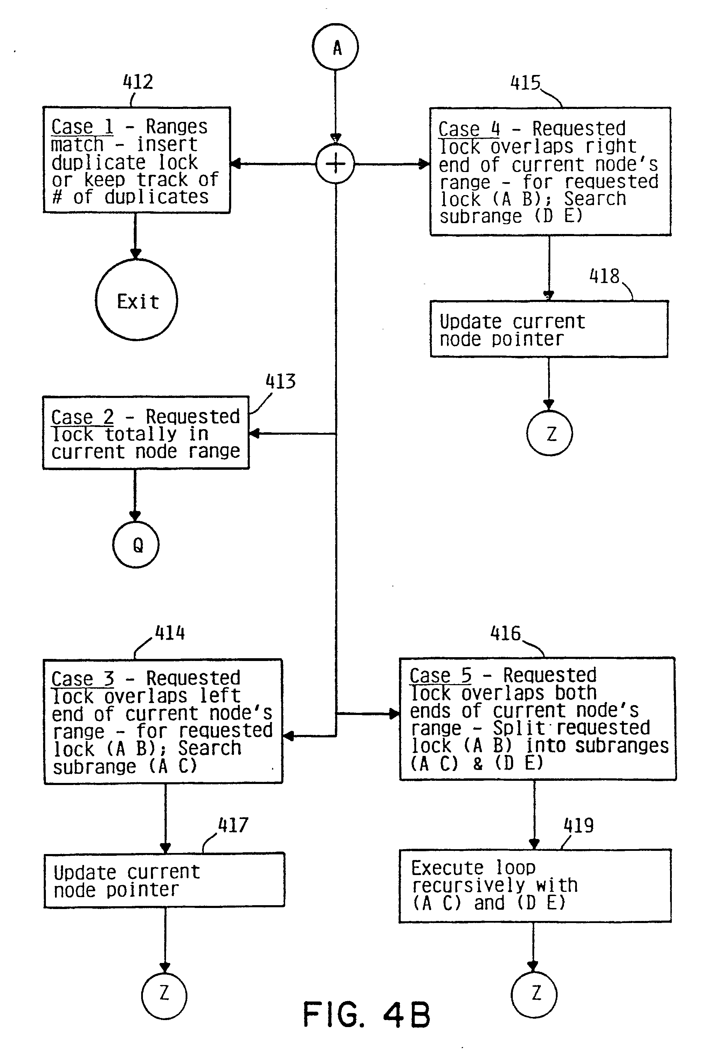

The novel methods for managing locks, described in detail hereinafter with reference to FIGS. 3A, 3B, 3C and FIG. 4, utilize a Cartesian tree where the first key is the offset, within the file, of the start of the lock range. The second key is the length or span of the lock (or, if convenient, the length minus one).

The following illustrative example, described with reference to FIGS. 3A, 3B, and 3C, will demonstrate how the invention works.

For the sake of illustration only, it is assumed that the area being managed by the invention contains one thousand separately-addressable bytes numbered 0 to 999.

According to the preferred embodiment of the invention, each lock (held or attempted) can be (and is) defined in terms of "starting" byte (offset of the first byte in a range of bytes, from byte 0); length (or span) to indicate the number of contiguous bytes protected (or to be protected); and lock type.

Furthermore, for the sake of the example, assume also that the following five ranges are initially locked (i.e., that somehow the locks have been defined appropriately in terms of the aforestated parameters, and have been granted):

lock 1 - A shared lock starting from byte 75, having a span of 20 bytes;

lock 2 - A shared lock starting from byte 85, having a span of 45 bytes;

lock - 3 An exclusive lock starting from byte 215, having a span of 35 bytes;

lock 4 - A shared lock starting from byte 360, having a span of 150 bytes; and

lock 5 - A shared lock starting from byte 420, having a span of 40 bytes.

FIG. 3A depicts a Cartesian tree, suitable for use in accordance with the teachings of the invention, into which the aforestated lock information (for locks 1-5) has been organized. In FIG. 3A, a node having an entry bracketed with "<" and ">" denotes an exclusive lock. An entry within parenthesis denotes a shared lock.

Assuming unique keys (situations involving duplicate keys will be discussed hereinafter) a set of fixed steps for constructing the tree structure depicted in

FIG. 3A, (i.e. organizing a plurality of parameters for each lock in a logically two-dimensional order) are:

(a) defining the entry with the largest second key as the Root Node of a Cartesian tree;

(b) defining a Current Node, initially choosing the Root Node to be the Current Node;

(c) partitioning the remaining entries (where each entry is a plurality of parameters associated with a given lock) into a first set of entries having first keys that are less than the first key of the Current Node, and a second set of entries having first keys that are larger than the first key of the Current Node. The first set will form the subtree to the left of the Current Node, while the second set will form the subtree to the right of the Current Node (as shown in FIG. 3A);

(d) choosing, for each set from the previous step, the entry with the largest second key and designating it the left (first set) or right (second set) node of the Current Node (which is the parent node of both); and

(e) alternately designating each Child Node to be the new Current Node and repeating the partitioning process (step c) until all entries have been made nodes within the tree.

When keys values may not be totally unique, it is necessary to modify the above steps (ordering rules) slightly. In the example set forth hereinabove, a given entity is inserted into the tree in a fashion such that its first key is greater than its left child's first key and less than its right child's first key; while the entry's second key is less than its parent's second key and greater than the second key of either of its children. To allow for possible duplicate keys the rules could be modified to insure that an entry's first key is greater than or equal to the first key of its left child, and that its second key is less than or equal to its parent's second key and greater than or equal to the second key of either of its children.

Using the structure that results by applying the above depicted method steps to potential tree entries, a lock attempt, according to the invention, involves a tree walk similar to that used for binary trees: At each node, the offset of the attempted lock is compared to the offset stored within the node. If the attempted lock's offset is less than or equal to the node's, the walk proceeds with the left child, otherwise the right child.

It should be noted that, up to this point, the method set forth hereinabove is identical to the one that would be used for an ordinary binary tree walk. The invention departs from the prior art by also comparing, at each node, the range of file offsets covered by the attempted lock with the range covered by the lock that the node represents.

If, as a result of this range comparison, no overlap is detected, then the walk proceeds as described hereinbefore. In this case it is important to understand what is implied by the structure of the tree: Since all the children of the Current Node have length values which are no greater than that of the parent (and this applies recursively to grandchildren, great-grandchildren, etc.), and since all children, grandchildren, etc. to the left of the Current Node have offsets which are not greater than the Current Node's offset, there is no possible way that any left child of any generation can have an ending offset greater than the Current Node's ending offset.

Thus, if the attempted lock falls to the right of the Current Node, all nodes to the left have been eliminated as possible conflicting locks. Likewise, if the attempted lock falls to the left of the Current Node, the fact that there is no overlap, and the fact that children to the right must have offsets greater than their parent's implies, that all nodes to the right have been eliminated as possible conflicting locks.

So long as no overlap is detected, the search proceeds downward with a "divide and conquer" strategy until there are no more children to examine.

The illustrative example set forth with reference to FIG. 3A, continues with reference to FIG. 3B, where the nodes of the tree have been labeled 301-305, with 301 corresponding to node (360 150); 302 corresponding to node (85 45); 303 corresponding to node (420 40); 304 corresponding to node (75 20); and 305 corresponding to node <215 37>, to aid in explaining the novel method.

To further illustrate the principles of the invention by way of example, suppose that a user of the invention wishes to acquire a new exclusive lock on a sequence of bytes which begins at offset 150 and continues for a total length of 40 bytes (i.e., the key pair "<150 40>"). According to the description set forth hereinabove, it must first be determined if any overlap exists between the new entry and the Root Node (node 301 of FIG. 3B). Since the new entry corresponds to a sequence of bytes that begins at offset 150 and ends at offset 189, and since the sequence denoted by the Root Node (node 301) doesn't start until offset 360, there is clearly no overlap between the two.

Next, the new entry's first key must be compared with the first key of Root Node 301. Since the new entry's key has a lower value, the left branch is followed by the method, from node 301 to node 302 of FIG. 3B.

The aforestated procedure is repeated with respect to node 302, which is treated as if it were the Root Node. First, a check for overlap is performed. It should be observed with reference to FIG. 3B that a sequence of bytes denoted by node 302 begins at offset 85 and ends at offset 129 -- clearly not overlapping with the new entry. Next, it should be observed, that the new entry's first key value is greater than the first key value of node 302 and thus, according to the novel method being set forth herein, the right branch from node 302 is followed to its Child Node, node 305 of FIG. 3B.

Finally, the same procedure is performed on node 305. It can be observed that the range denoted by node 305 begins at offset 215 -- beyond the end of the range denoted by the new entry. Given that the new entry's first key value is less than the first key value of node 305, an attempt would normally be made to follow the left branch out of node 305. However, since there is no left Child Node attached to node 305, the novel method terminates the search with the assurance that the new entry <150 40> does not conflict with any existing lock.

The new entry can now be inserted into the tree as a new node, observing the aforestated rules for the construction of a Cartesian tree.

The insertion access can be made more efficient by observing that the tree walk used to search for a conflict will, if does not encounter a conflict, always pass through or near the point of insertion. According to a preferred embodiment of the invention, this information would be saved during the conflict search and be used later during the insertion operation.

In the case of the illustrative example, it should be observed that the new node must fall below and to the right of node 302, and above and to the left of node 305. FIG. 3C illustrates the new entry, node 306, inserted into the tree.

A more complex situation arises when there is overlap between the attempted lock and some Current Node. If either the attempted lock or the Current Node's lock is exclusive (vs shared), the novel method signals a lock conflict and the method terminates. A specific example of this situation, explained with reference to FIG. 3C, is as follows. Consider an attempt to acquire a shared lock denoted as (160 10), given the tree resulting from the prior example (FIG. 3C). The tree walk would continue as before until the right branch of node 302 is followed to the previously inserted node 306. At this point, the invention determines that the range denoted by (160 10) (the new attempted lock) overlaps with the range denoted by <150 40> (node 306), and that one of the two ranges (the one for node 306) corresponds to an exclusive lock, Thus, a true lock conflict exists, the requested lock of (160 10) cannot be granted, and, accordingly, the pair (160 10) is not inserted into the Cartesian tree.

If both locks are shared locks then there are five potential subcases that need to be dealt with by the invention:

1. The attempted lock matches exactly the offset and range of the Current Node. In this case the search need proceed no further as the attempted lock can certainly be obtained (one shared lock over a range guarantees that no exclusive locks can exist within that range), and the most logical strategy is to either chain the new lock from the existing identical lock, or to simply increment a lock count in the existing lock. The lock count would be a simple way of assuring that the existence of two or more shared locks, having the same offset and range, is "remembered" by the invention in the event any of these locks is released.

2. The attempted lock is a proper subrange of the Current Node's range. In this case, the lock can certainly be obtained, but it will be necessary to continue the search in order to determine the proper insertion point in the Cartesian tree, for the new lock.

3. The attempted lock spans the left edge of the Current Node's range. In this case, the search could simply proceed. However, according to a preferred embodiment of the invention, since that portion of the attempted lock's range that overlaps the Current Node's range can certainly be locked, it is advantageous to narrow the range of the lock attempt to exclude the overlapped area. This improves search performance by reducing the chance of detecting further overlaps farther down in the tree. It is important to note, however, that the full length of the new lock must be used to determine its position in the tree, since the pre-existing lock could be released at some future time and remove its associated "umbrella" of protection.

4. The attempted lock spans the right edge of the Current Node's range. In a fashion similar to the prior case, it is advantageous to increase (for the purposes of the conflict search only) the offset of the attempted lock and reduce its range so that only the non-overlapping portion of the range is considered.

5. The attempted lock spans the Current Node's range on both sides. Since it is known that there can exist no conflicting locks within the range of the Current Node, the problem can be divided into two smaller problems, corresponding to cases 3 and 4 above. The novel method proceeds by performing two searches, one on the left side and one on the right side of the Current Node. Since these searches could result in further such divisions, the preferred implementation of the invention calls for recursively invoking the search twice, once for each side. If none of the sub-searches detects a conflict, then no conflicts can exist. In this case, the correct insertion point for the lock inevitably lies above the point of the first split and has already been visited. In a preferred embodiment of the invention, the location for the insertion would already be recorded, eliminating the need for an additional search.

A specific example will now be set forth to illustrate the methodology set forth hereinabove. Referring again to FIG. 3C, consider an attempt to obtain a shared lock on the range (70 90), that is, a lock on the sequence of bytes beginning at offset 70 and ending at offset 159.

To start with, the range of the attempted lock is determined to not overlap with the range of the Root Node, so an ordinary binary tree walk algorithm selects the left branch from node 301 to node 302 (since 70 is less than 360).

Upon examining node 302 its range is found to overlap with the range of the attempted lock. In fact, the range of the attempted lock spans the range of node 302 on both sides, and, given that neither range represents an exclusive lock, subcase five above, is selected. That is, the invention proceeds by dividing the problem into the smaller problems of searching for a conflict for the subrange (70 15) and also searching for a conflict for the subrange (130 30).

Since the first subrange, (70 15) has a first key less than the first key of node 302 (always the case after this type of split), the search proceeds to the left, to node 304. The search argument, subrange (70 15), overlaps the range of node 304 on the left, so, according to subcase three above, the invention narrows the subrange to (70 5) and the novel method continues. However, node 304 has no Child Nodes so the search with that subrange completes with no conflict found.

Next, returning to node 304, the search for a conflict continues using subrange (130 30) as the search argument. Since this subrange (necessarily) has a first key greater than the first key of node 304, the search continues with the right Child Node of node 304, that is to say, node 306.

Upon comparing the search subrange (130 30) with the range of node 306, it is discussed that the right edge of the search subrange overlaps the left edge of node 306's range. Observing that node 306 represents an exclusive lock, the attempted lock must be denied.

Reference is now made to FIG. 4 where a flow chart is set forth that recapitulates the method steps taught hereinabove. Those skilled in the art, with reference to the flow chart and the written description set forth herein, can implement the invention (for example, as a computer program), to improve the data base management capability of a computer system.

In particular, FIG. 4 illustrates how to create a Cartesian tree from certain lock related parameters (i.e., the step of organizing the parameters) and how to "walk" through the tree to determine whether or not to allow lock attempts (i.e., the step of managing lock attempts).

When the data base management system is initialized, it is assumed that no locks are in effect, and that a Current Node pointer (e.g., a register designated to contain the address of Current Node information), is set to point at the root of the (empty) Cartesian tree. This initialization step is indicated by block 401 in FIG. 4. Those skilled in the art will readily appreciate that if a tree is provided at initialization, the method set forth with reference to FIG. 4 will be equally applicable to deal with lock attempts, just as if the method itself constructed the tree, rather than having it provided at initialization.

Again, assuming an empty tree at initialization, the parameters associated with the first lock attempt, provide the information to the data base management system to construct the aforementioned Root Node of the Cartesian tree.

The invention assumes that a plurality of locks will be used to manage at least one predefined area of storage. Each lock is meant to encompass (protect) a contiguous range of byte stream file storage.

A plurality of lock related parameters for each of the locks (attempted or held) is first defined. As indicated hereinabove, the preferred embodiment of the invention defines a file offset key, span, and lock type (shared or exclusive) for each lock (attempted or held). These parameters can be predefined or can be dynamically created inputs to whatever mechanism (e.g., hardware, software or firmware), is used to implement the invention.

The first decision diamond in FIG. 4, diamond 402, calls for determining if any tree entries (or subtree entries) exist. If none exist, the lock parameters associated with the attempted lock are placed into the appropriate location of the tree as indicated by block 403 of FIG. 4.

The appropriate location for the first lock attempt is at the Current Node pointer, previously set in block 401 to point at the root of the tree. As will be seen hereinafter, operation of the novel method in accordance with the steps depicted in FIG. 4, will end up with the Current Node pointer pointing to the appropriate tree location for inserting the attempted lock (first or subsequent attempted lock) being processed.

An exit from the search method is shown to the left of block 403, since inserting lock information into the tree structure represents a successful termination for the novel method.

Within the main loop of the search method, i.e., nodes of the tree remain to be searched (following diamond 402), diamond 404 is shown in FIG. 4 where a determination is made as to whether the range of the requested lock overlaps with the range of the node pointed to by the Current Node pointer (e.g., the root of the tree on the first pass from diamond 402 to diamond 404).

If no overlap exists, the path to the left of diamond 404 is taken, where it is determined whether to proceed to the right or left Child Node based on the relative key values. In particular, at diamond 405, it is determined if the starting offset (first key value) of the requested lock is less than or equal to the starting offset (first key value) represented by the Current Node. If yes, the Current Node pointer is set to the address of the left Child Node (block 406), if no, the Current Node pointer is set to the address of the right Child Node (block 407).

From either of blocks 406 or 407, the method is shown going back (via loop "Z") to make the determination specified in diamond 402. If no left Child Node (after exiting block 406) or no right Child Node (after exiting block 407), exists, the address placed into the Current Node pointer is nil and the loop will terminate (via block 403 and the exit to the left of block 403). The new lock can be inserted into the tree using the method steps set forth hereinbefore for creating a Cartesian tree.

However, if an overlap is detected at diamond 404, a determination is made, at diamond 408, as to whether the requested lock or lock pointed to by the Current Node pointer, is an exclusive lock. If the answer to this question is yes, a conflict exists (as shown at block 409), and the loop is terminated with an indication that the requested lock cannot be allowed (block 410).

If no exclusive lock is indicated by the test performed at diamond 408, then a determination is made, at block 411, as to which of the five cases set forth hereinabove exists. I.e., the type of overlap is determined and the method proceeds based on overlap type.

Blocks 412-416 represent the differing actions taken on the five possible paths emanating from diamond 411.

Block 412 is for the case where the requested lock is determined to exactly match the range of the Current Node. In this case the search is terminated (by setting the Current Node pointer to nil), since the requested lock can certainly be allowed. As indicated hereinbefore, a duplicate lock can be inserted in the tree, or preferably,
a "bookkeeping" entry can be made to keep track of the duplicate lock.

Block 413 is for the case where the requested lock is determined to be within the range of the Current Node. In this case, the search is also terminated (by setting the Current Node pointer to nil), since the requested lock can certainly be allowed. Furthermore, in this case, no "bookkeeping" entry will suffice to record the requested lock. The requested lock must actually be inserted into the tree at the proper location. FIG. 4 shows this accomplished via taking loop "Q" to block 403, after which the loop terminates.

Block 414 is for the case where, for requested lock (A B), the subrange (A C) is created (C<B); where A + C is the address of the byte just to the left edge of the Current Node. In this case, the Current Node pointer is set (block 417) to the left Child Node of the Current Node, but for the rest of the search, the range of the requested lock is considered to be shortened. The search continues by looping back to "Z" as shown in FIG. 4.

Block 415 is effectively the inverse of block 414. Block 415 is for the case where, for requested lock (A B), the subrange (D E) is created (D>A and E<B); where D is the address of the byte just to the right edge of the Current Node and D + E equals A + B (i.e, results in the same address as A + B, namely the right edge of the requested lock range). In this case, the Current Node pointer is set (block 418) to the right Child Node of the Current Node, but for the rest of the search, the range and offset of the requested lock is considered to be modified so as to start just to the right of the range represented by the Current Node (and end where the original requested lock ended). The search continues by looping back to "Z" as shown in FIG. 4.

Finally, block 416 is for the case where the requested lock overlaps both ends of the Current Node's range. In this case (for requested lock (A B), both subranges referred to hereinabove ((A C) and $\overline{(D\ E)}$) are created and, as indicated in block 419, the method shown in FIG. 4 is called upon recursively for each subrange (i.e., the method is executed twice).

According to one embodiment of the invention, for the first execution, use the left Child Node of the Current Node as the initial value of the Current Node pointer, and, as the range of the requested lock, use that portion of the requested lock range that falls to the left of the Current Node.

For the second execution, use the right Child Node of the Current Node as the initial value of the Current Node pointer, and, as the range of the requested lock, use that portion of the requested lock range that falls to the right of the current Node.

Should either of these searches determine a conflict (at diamond 408) then a conflict exists. Otherwise no conflict exists and the requested lock can be granted.

Concerning performance, those skilled in the art will readily appreciate that, in general, the performance of the Cartesian tree is the same as for an ordinary binary tree. If the tree is balanced, the cost of a search is roughly proportional to log N (where N is the number of nodes), and the worst case search (when the tree is a "vine") is roughly proportional to N. Also, since balance is not the primary factor for selecting among the possible tree structures (unlike conventional binary trees where the method used is usually constructed to choose the "best" balanced tree among the alternatives) it is reasonable to assume that balance will not be ideal.

It is clear, however, that the typical environment will frequently involve large numbers of locks of the same length, assuming that the applications commonly impose some sort of fixed-length record structure on the data. If this is the case, the second key values of many nodes will be identical, and the Cartesian tree rules will not fully determine structure. In this case it may be advantageous to apply some other strategy to attempt to improve the balance of the equal-length nodes.

One possibility would be to utilize standard binary tree balancing strategies. Another possibility is to organize subtrees of equal-length nodes as binary radix trees, based on the file offset values in the nodes (or some permutation of the offset value bits, if it serves to improve the distribution of the resulting values). This simple strategy would produce reasonably good balance of the subtrees under most circumstances; but it has the problem that proper order is context dependent and therefore insertions and deletions could be expensive. However, any other weight factor (such as the value of the bit reversed file offset) could be used to provide additional structural information and generally increase the likelihood of balance.

Another concern related to performance is paging. If the tree nodes are stored in virtual memory, the possibility exists that each node along a given search path lies in a different storage page and that paging could therefore dominate computation as a performance factor. A strategy to minimize paging makes use of the fact that unused locations for tree nodes can themselves be organized into some sort of a tree. One possibility is to organize the unused locations as binary tree, based on the address or index of the locations themselves. Then, when a node was allocated, the tree of unused locations could be searched to find the location closest to the parent of the insertion point. Typically, the search would be satisfied as soon as any available location was found within the page that contained the parent.

What has been described hereinabove is a method for managing at least one predefined area of storage, utilizing a plurality of locks, each of which encompass a contiguous range of storage. This invention meets all of the objectives set forth hereinbefore.

Those skilled in the art will recognize that the foregoing description and examples included therein, have been presented for the purposes of illustration and description only. The description set forth is not intended to be exhaustive or to limit the invention to the precise form disclosed. Obviously, many modifications and variations are possible in light of the above teaching without departing from the scope or spirit of the invention.

The embodiments and examples set forth herein were presented in order to best explain the principles of the instant invention and its practical application to thereby enable others skilled in the art to make and use the instant invention in various embodiments and with various modifications as are suited to the particular use contemplated.

## Claims

1. A method for controlling access in a general purpose computing system to at least one portion of a shared data storage resource containing at least one byte stream file, wherein said system includes data base management means that utilize a plurality of locks, each of which encompasses a contiguous range in said shared data storage resource and each of which has a set of lock related parameters associated therewith, to assure the integrity of shared data, comprising the steps of:

   (a) organizing the sets of lock related parameters associated with said plurality of locks in a logically two dimensional order; and

   (b) managing lock attempts, via said data base management means, by comparing the set of lock related parameters associated with an attempted lock, with at least a portion of said sets of lock related parameters organized in said two dimensional order.

2. A method as set forth in claim 1 wherein each set of lock related parameters includes a first parameter which indicates the starting location of the contiguous range protected by a given lock.

3. A method as set forth in claim 2 wherein each set of lock related parameters further includes a second parameter which indicates the span of a given lock.

4. A method as set forth in claim 3 wherein each set of lock related parameters further includes a third parameter which indicates whether a lock held or being attempted is a shared (read only) or exclusive (read/write) lock.

5. A method as set forth in claim 4 wherein said step of organizing the sets of lock related parameters in a logically two-dimensional order, further comprises the step of defining a set of ordered pairs having a first key and second key for each of said plurality of locks, wherein said first key is chosen to be said first parameter associated with a given lock, and said second key is chosen to be said second parameter associated with a given lock.

6. A method as set forth in claim 5 further comprising the steps of:

   (a) determining which of said ordered pairs has the largest second key;

   (b) designating the ordered pair with the largest second key as the Root Node of a Cartesian tree;

(c) setting a Current Node address pointer, maintained by said data base management means, to the address of said Root Node;

(d) partitioning the remaining ordered pairs into a first set of ordered pairs having first key values less than the first key of the node pointed to by said Current Node pointer, and a second set of ordered pairs having first key values greater than the first key value of the node pointed to by said Current Node pointer, whenever said ordered pairs are unique;

(e) determining which ordered pair from each of said first and second pairs created in step (d), has the largest second key;

(f) designating the ordered pair determined in step (e) to have the largest second key in said first set of ordered pairs, as the left Child Node of the node being pointed to by said Current Node pointer;

(g) designating the ordered pair determined in step (e) to have the largest second key in said second set of ordered pairs, as the right Child Node of the node being pointed to by said Current Node pointer; and

(h) alternately setting said Current Node pointer to point at each designated right Child Node and left Child Node, and repeating method steps (d)-(h) until all of said ordered pairs have been made nodes of said Cartesian tree.

7. A method as set forth in claim 6 wherein said step of partitioning, whenever said ordered pairs are not totally unique, is performed so as to assure that a given ordered pair's first key is greater than or equal to the first key of its left child, and that said given ordered pair's second key is less than or equal to its parent's second key and greater than or equal to the second key of either of its children.

8. A method as set forth in claim 6 wherein said step of managing lock attempts further comprises the step of walking through at least a portion of said Cartesian tree utilizing said third parameter, associated with each lock, during said walk to determine lock conflicts.

9. A method as set forth in claim 6 wherein said step of managing lock attempts further comprises the steps of:

(a) inputting, to said data base management means, the set of lock related parameters associated with a given attempted lock;

(b) initializing said Current Node pointer to point at said Root Node;

(c) determining if a Root Node has previously been inserted into said tree; and

(d) inserting the attempted lock into said tree as the Root Node if no prior Root Node exists.

10. A method as set forth in claim 9 further comprising the steps of:

(a) determining if any overlap exist between said attempted lock and the node pointed to by said Current Node pointer (the Current Node), whenever a Root Node exists in said tree;

(b) determining if either said attempted lock or the lock represented by said Current Node, is an exclusive lock; and

(c) signalling a conflict in the event either said attempted lock or the lock represented by said Current Node, is exclusive.

11. A method as set forth in claim 10 wherein said step of determining if either said attempted lock or the lock represented by said Current Node is an exclusive lock, is performed by comparing the third parameter associated with said attempted lock with the third parameter associated with the lock represented by said Current Node.

12. A method as set forth in claim 10 further comprising the steps of:

(a) determining whether to set the Current Node pointer to the left Child Node or the right Child Node of the Current Node depending on the values of the first and second parameters associated with the attempted lock and the lock represented by said Current Node;

(b) setting the Current Node pointer to the address of the Child Node determined in step (a).

13. A method as set forth in claim 12 further comprising the step of determining, whenever both said attempted lock and the lock represented by said Current Node are shared locks, if the first and second parameters associated with said attempted lock are equal to the first and second parameters associated with the lock represented by said Current Node.

14. A method as set forth in claim 13 further comprising the step of maintaining a duplicate lock count whenever it is determined that the first and second parameters associated with said attempted lock are equal to the first and second parameters associated with the lock represented by said Current Node.

15. A method as set forth in claim 13 further comprising the step of determining whether or not the attempted lock is totally within the range of the lock represented by said Current Node.

16. A method as set forth in claim 13 further comprising the step of determining whether the attempted lock in anyway overlaps the range of the lock represented by said Current Node.

17. A method as set forth in claim 16 further comprising the step of searching said tree utilizing a subrange of said attempted lock whenever the attempted lock overlaps one end of the range of the lock represented by said Current Node.

18. A method as set forth in claim 16 further comprising the step of recursively searching said tree utilizing at least two subranges of said attempted lock whenever the attempted lock overlaps both ends of the range of the lock represented by said Current Node.

```
5                      10                         15
 \                    /  \                        /
  10               5       15                   10
    \                                          /
     15                                      5
```

# FIG. I

```
        (10 8)
        /    \
    (5 2)    (15 6)
```

# FIG. 2

(360 150)
  /       \
(85  45)  (420  40)
 /     \
(75 20)  <215 35>

## FIG. 3A

(360 150)⟝301
  /       \
302⟝(85 45)   (420 40)⟝303
   /     \
304⟝(75 20)  <215 35⟩⟝305

## FIG. 3B

(360 150)⟝301
  /       \
302⟝(85 45)   (420 40)⟝303
   /     \
304⟝(75 20)  <150 40⟩⟝306
                \
              <215 35⟩⟝305

## FIG. 3C

FIG. 4A

A

412
Case 1 - Ranges match - insert duplicate lock or keep track of # of duplicates

+

415
Case 4 - Requested lock overlaps right end of current node's range - for requested lock (A B); Search subrange (D E)

Exit

418
Update current node pointer

Z

413
Case 2 - Requested lock totally in current node range

Q

414
Case 3 - Requested lock overlaps left end of current node's range - for requested lock (A B); Search subrange (A C)

416
Case 5 - Requested lock overlaps both ends of current node's range - Split requested lock (A B) into subranges (A C) & (D E)

417
Update current node pointer

419
Execute loop recursively with (A C) and (D E)

Z

Z

FIG. 4B